# EUROPEAN PATENT SPECIFICATION

(11) **EP 3 272 522 B1**
(45) Date of publication and mention of the grant of the patent: **27.05.2020**
(21) Application number: 16397522.0
(22) Date of filing: 20.07.2016
(51) Int. Cl.: B32B 21/06, B32B 7/12, B32B 21/14, B32B 3/30

(54) **A COATED PLYWOOD PANEL, A METHOD FOR COATING A PLYWOOD PANEL, AND AN ARRANGEMENT FOR COATING A PLYWOOD PANEL**
BESCHICHTETE SPERRHOLZTAFEL, VERFAHREN ZUM BESCHICHTEN EINER SPERRHOLZTAFEL UND ANORDNUNG ZUR BESCHICHTUNG EINER SPERRHOLZTAFEL
PANNEAU DE CONTREPLAQUÉ REVÊTU, PROCÉDÉ DE REVÊTEMENT D'UN PANNEAU DE CONTREPLAQUÉ ET DISPOSITIF DE REVÊTEMENT D'UN PANNEAU DE CONTREPLAQUÉ

(43) Date of publication of application: 24.01.2018
(73) Proprietor: UPM Plywood Oy, 15140 Lahti (FI)
(72) Inventor: NIEMINEN, Harri, 15140 Lahti (FI); PATOVIRTA, Juha, 15870 Hollola (FI); ASIKAINEN, Marjaliisa, 17200 Vääksy (FI); TAAVILA, Kati, 15100 Lahti (FI)
(74) Representative: Berggren Oy, Tampere

(56) References cited:
- EP-A1- 2 769 838
- EP-A1- 2 952 344
- WO-A1-2015/185789
- US-A1- 2005 003 224
- US-A1- 2007 196 676
- US-A1- 2015 191 042

## Description

### Technical field

The invention relates to coated plywood panels, in accordance with claim 1. The invention relates to methods and arrangements for coating plywood panels, in accordance with claims 7 and 13, respectively.

### Background

Plywood panels are commonly used e.g. in flooring, shelves, and wall structures. To improve the moisture resistance, plywood panels may be coated with a coating. A coating herein refers to a thin layer of material covering a plywood panel. Thus, coating refers to a covering. Coated plywood panels are known from EP 2 952 344 A1, US 2015/0191042 A1, and US 2005/0003224 A1. Coatings typically comprise paper as a carrier for polymer material. The coating is typically a polymer coating. Polymer coatings are, however, often slippery when wet. Therefore, in order to increase friction the coating may be patterned.

One problem related to such coatings is that the colour of the coating may vary spatially within a panel and from a panel to another panel. Such variations may occur even if the same materials and processes are used. This poses some restrictions for the use of such panels. For example, panels may need to be manually classified according to their colour. As an alternative, the panels could be painted. Both these processes, however, are somewhat cumbersome, and increase the cost of use.

The purpose of the present invention is to present a method and apparatus by which the colour variations of a coated plywood panel can be reduced. In addition, the purpose of this invention is to present a panel having been manufactured by said method. Furthermore, the purpose of this invention is to present an arrangement for performing such a method.

### Summary

It has been found that the colour variations may result from two factors. First, when the patterns are manufactured onto the coating, the patterns, or at least most of the patterns, should be filled. The patterns are typically manufactured with a pressing surface comprising indentations. When such indentations are filled, corresponding protruding patterns are formed. To fill these indentations, the coating material should flow reasonably well into the indentations. Therefore, the flowability of the coating material during coating should be reasonably large. Second, if the coating becomes too thin during manufacturing, the colour variations may result from the thin coating becoming partly transparent. Therefore, the thickness of the coating should be reasonable. When the coating is applied by pressing, in case the flowability of the coating material is too high, the coating material will flow off the surface that is coated. Thus, the flowability of the coating material during coating should be reasonably small. The thickness of the coating of a coated panel can naturally be affected also by the thickness of the coating material (or materials) used for coating the panel. It is also noted that after the coating process the coating material is practically not at all flowable, because the coating material polymerizes during the coating.

It has been realized that the flowability of a coating material that comprises resin can be adjusted by adding water to the process. Therefore, water is arranged onto such a surface of the plywood panel, which is coated with the resin-based coating after the application of water. Moreover, to ease the process, the resin is applied with help of a paper support. Thus, the coating of a coated panel comprises paper impregnated with polymerized resin; and correspondingly, in a method, such a coating is used that the coating comprises paper impregnated with resin.

The invention is disclosed in the claims.

### Brief description of the drawings

- Figs. 1a-1d: show, in a side view, coated plywood panels,
- Fig. 1e: shows, in a side view, an arrangement of two coated plywood panels,
- Figs. 2a-2c: show, in a top view a coated surface of a plywood panel,
- Figs. 3a-3d: show schematically a method and an arrangement for coating a plywood panel,
- Figs. 4a-4e: show the structure of a plywood panel,
- Figs. 5a-5e: show, in a side view, structures of plywood panels,
- Figs. 6a-6d: show, in a side view, structures of plywood panels,
- Figs. 7a-7b: show schematically a method and an apparatus for hot-pressing a preform for a coated plywood panel,
- Figs. 8a-8c: show pressing surfaces configured to press a coating to a plywood panel in a hot-press process or apparatus, and
- Figs. 9a-9b: show a surface of a coated plywood panel.

### Detailed description

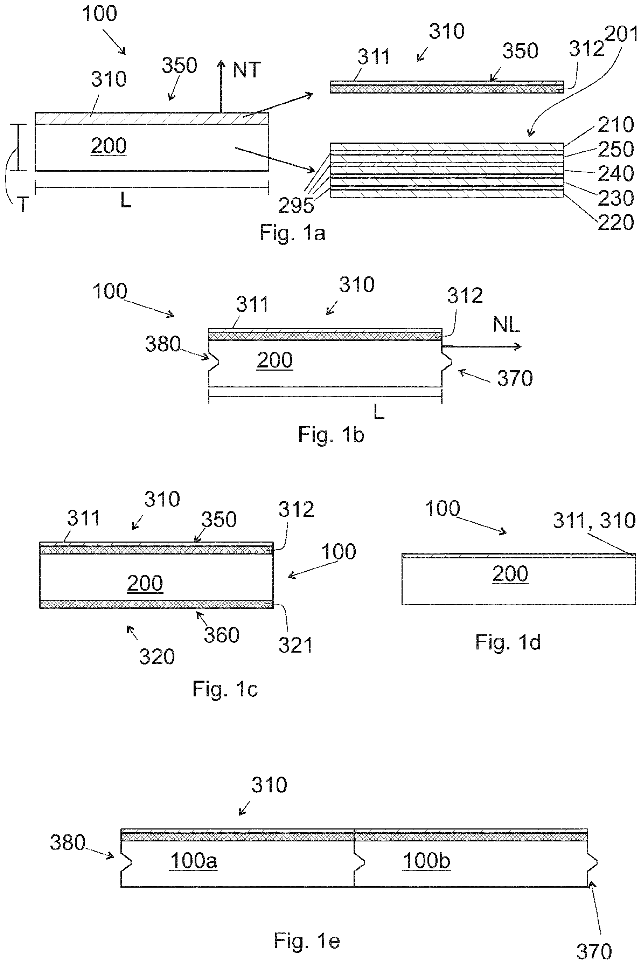

Figures 1a - 1d show, in a side view, a coated plywood panel 100. The panel comprises a plywood part 200 and a primary coating 310. Such a coated plywood panel 100 may have been manufactured by coating a plywood panel 200 with the primary coating 310. However, the panel 200 may first be coated with another coating, e.g. on the other side. Thus, an uncoated plywood panel 200 becomes a part (the plywood part 200) of a coated plywood panel 100. Properties and definitions applicable to a plywood panel 200 apply to a plywood part 200 of a coated plywood panel 100 and vice versa.

As for the term "a coating", herein a coating is a covering that is applied to the surface of the plywood part 200. The purpose of applying the primary coating 310 is both visual and functional, as detailed later. The primary coating 310 itself is typically an all-over coating, completely covering the plywood part from one side.

The coated plywood panel 100, the primary coating 310 thereof, comprises a primary surface 350, that has a surface normal NT that is parallel to the thickness of the coated plywood panel 100 and faces away from the plywood part 200, as indicated in Fig. 1a. As illustrated in Fig. 1a, the thickness T of the plywood part 200 and the thickness of the primary coating 310 are mutually parallel and parallel to the thickness of the coated panel 100.

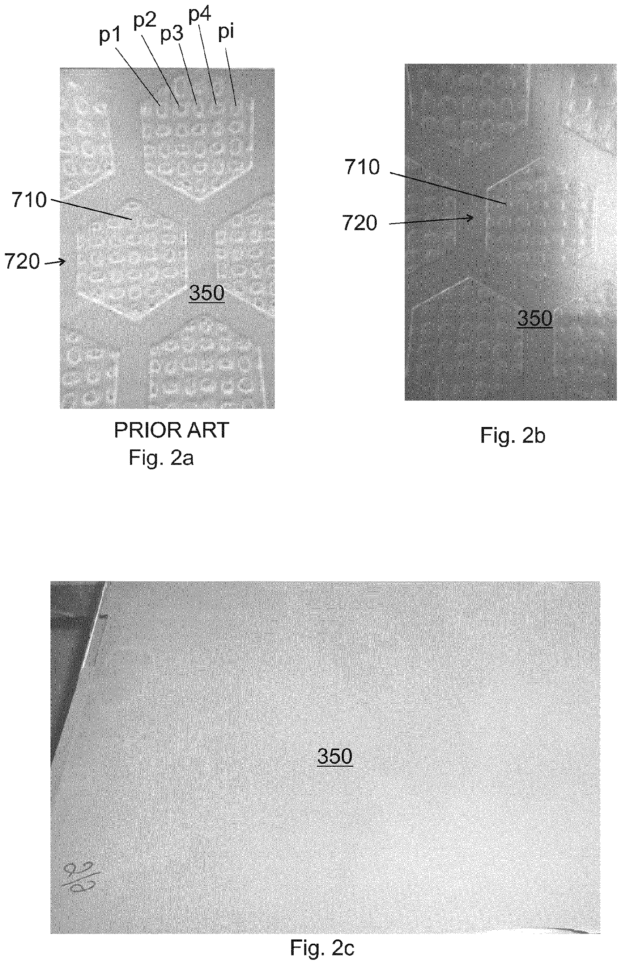

As indicated in background, a problem with coated panels of prior art is the colour variation of the primary surface 350. Figure 2a shows a primary surface 350 of a coated plywood panel of prior art. The surface 350 comprises patterns (720, 710). The patterns are protruding from the surface 350; whereby the patterns of the surface are protrusions 710, 720. The surface 350 comprises relatively small and roundish first protrusions 710. These first protrusions 710 protrude from a larger second protrusion 720. In the figure, the second protrusions 720 are hexagonal. A purpose of the protrusions 720, 710 is to improve the visual quality of the coated panel 100. In particular, when the coated panel 350 comprises multiple relatively small protrusions 710, the protrusions 710 hide some of the small deviations of the panel, which otherwise would be visually observable. Such variations include non-uniform thickness of the panel.

As indicated in Fig. 2a, the first protrusions 710 (i.e. the smaller protrusions) of prior art are crater-like, i.e. uneven. Typically also the circumference of the first protrusion 710 shown in the figure is not even, i.e. the circumference of the first protrusion 710 is not equally high at substantially all its locations. It has been found that such uneven protrusions 710 have typically a light appearance, especially at the boundary of the protrusions, lighter than corresponding even (i.e. integral) protrusions. It has been found that some of the colour variations are due to these crater-like protrusions.

In order to control the colour of the primary surface 350, the proportional number of uneven (i.e. crater-like) first protrusions 710 (i.e. their number relative to the total number of first protrusions 710) should be minimized. When minimized, the colour variations within a panel will decrease, as well as the colour variations from a panel to another panel. Moreover, as the crater-like protrusions are not exactly similar, maximizing their amount does not solve the problem. It is also noted that controlling the proportion in another way than minimizing would not solve the problem, because of the different appearance of the crater-like protrusions.

It has been found that the amount of uneven protrusions can be controlled by controlling the flowability of the material of the primary coating 310; i.e. the flowability the material has during the process of coating. In particular, by increasing the flowability of the material of the primary coating 310, the number of uneven protrusions can be decreased. Figure 2b shows, as an example, a primary surface 350 of a coated plywood panel 100 made according to an embodiment the present inventive method. Correspondingly, essentially all of the first protrusions 710 are even. The term even will be defined in more detail below.

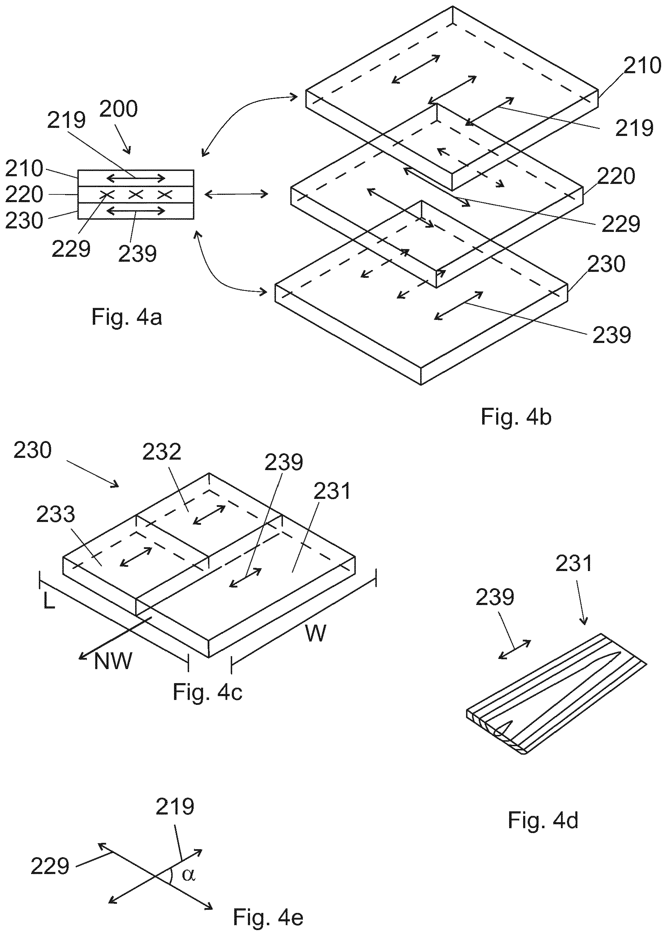

As indicated above, the method relates to a method for coating a plywood panel 200. In this description and referring to Figs 1a-1d and 4a-4e, the term "plywood panel" refers to an object having a length L, a width W, and a thickness T, wherein the thickness T is less than the smaller of the length L and the width W (see Figs. 1a and 4c). Referring to Fig. 1a, a plywood panel 200 comprises a first veneer layer 210 comprising wood; a second veneer layer 220 comprising wood, the second layer 220 arranged relative to the first layer 210 in the direction of the thickness T; and adhesive 295 in between the first veneer layer 210 and the second veneer layer 220. In this description, the first veneer layer 210 is a first surface veneer layer 210 of the plywood panel 200. Thus, no wooden veneer layer of the plywood panel 200 is left on a first side of the first veneer layer 210. In this way, the first veneer layer 210 comprises a main surface 201 of the plywood panel 200. The main surface 201 has a surface normal that is parallel to the thickness T of the panel 200. The main surface 201 faces away from all the veneer layers of the plywood panel 200. Moreover, the primary coating 310 will be applied onto the first side of the first veneer layer 210, i.e. on the main surface 201 of the plywood panel 200.

Furthermore, the primary coating 310 in itself is free from wooden veneer layers. Thus, no wooden veneer layer of the coated plywood panel 100 is left on the first side of the first veneer layer 210.

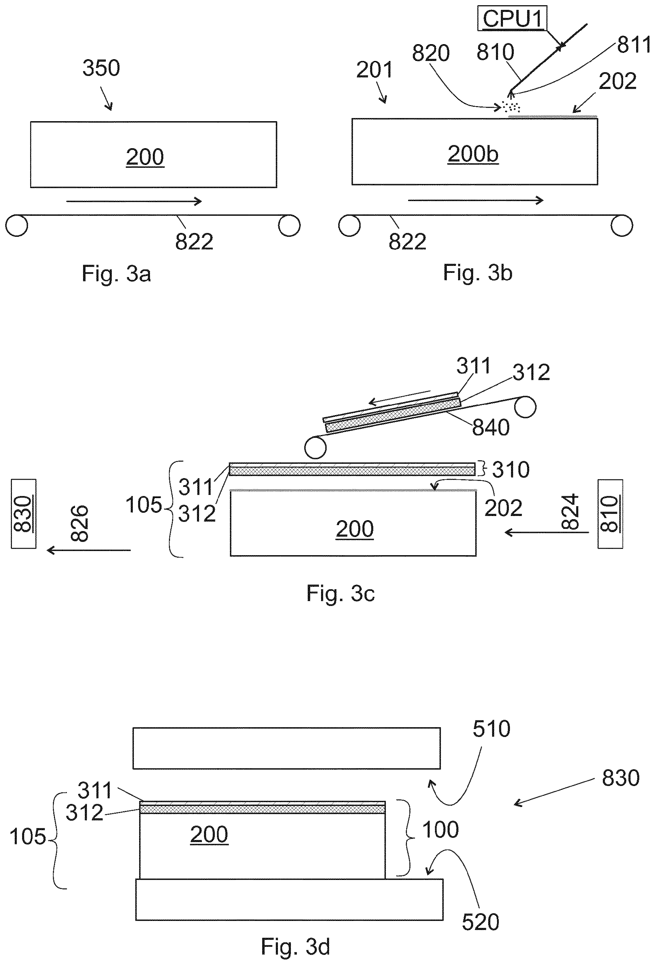

Referring to Figs. 3a to 3d, an embodiment of the method for coating a plywood panel 200 comprises arranging available a plywood panel 200 (Fig. 3a). The method further comprises arranging on the main surface 201 of the plywood panel 200 an amount of water 820, thereby forming a wet main surface 202 of the plywood panel 200 (Fig. 3b). In the method, components of a primary coating 310 are arranged on the wet main surface 202 of the plywood panel 200 (Fig. 3c). The primary coating 310, before joined to the plywood panel 200, comprises paper and some resin. The resin is impregnated in the paper. However, the primary coating 310 may comprise at least two layers 311, 312. The layers may be referred to as the components of the primary coating 310. The layers (if more than one is used) may be arranged on the panel 200 one after the other or they may be arranged at the same time. By arranging the components 311, 312 of the primary coating 310 on the wet main surface 202, a preform 105 for a coated plywood panel 100 is formed. Finally, the preform 105 is hot pressed to coat the plywood panel 200 and to form a coated plywood panel 100 (Fig. 3d). In Fig. 3d, the reference numeral 105 indicates the situation before hot-pressing, when the components of the coated panel are not joined to each other. The reference numeral 100 indicates the situation after hot-pressing, when the components of the preform 105 have been joined to form an integral coated plywood panel 100. When hot-pressed, at least some of the resin of the primary coating 310 becomes polymerized. The primary coating 310, after joined to the plywood panel 200, i.e. as part of a coated plywood panel 100, comprises paper and some polymerized resin.

In this way, the primary coating 310 forms a layer attached to the first veneer layer 210 of the plywood panel 210, the primary coating 310 covering the main surface 201 of the plywood panel 200. The primary coating 310 may cover the whole main surface 201 or a part of the main surface 201. In an embodiment, the primary coating 310 is an all-over coating. The primary coating 310 is attached to the first veneer layer 210 uniformly, i.e. at all its points.

The term "paper" in the above refers to a flexible non-woven sheets of material (typically having the specific weight of from 40 g/m² to 300 g/m²) produced by pressing together moist fibres of cellulose pulp derived from wood, rags or grasses, and drying them into flexible sheets.

The term "resin" in the above refers to a solid or highly viscous substance, of which at least some is convertible into a polymer. Typically resins comprise polymers obtained as a result of a partial polymerization reaction. More precisely, the term "resin" refers to a solid or highly viscous substance, of which at least some is convertible into a polymer by the application of heat in such a way that the temperature of the resin rises above 90 °C. Typically, simultaneously to polymerization, the resin is applied onto a surface. To apply and adhere the resin onto a surface, some pressure is also applied. The pressure may be e.g. at least 0.05 MPa (and, since applied, above the atmospheric). Typically pressures of at least 0.1 MPa or 0.25 MPa are used. Such a pressure also helps to form patterns (e.g. 720, 710) onto or into the surface, since the pressure drives the resin into indentations of a pressing surface.

As indicated above, when heat is applied e.g. in a hot-press process, at least some of the resin transforms to a polymer, i.e. is polymerized. Moreover, because of the heating, the resin becomes fully polymerized. In this way, the term "polymerized resin" refers to a polymer obtained from the resin by a full polymerization of the resin as such. Thus, unlike the resin, the polymerized resin cannot be further polymerized by the application of heat. The polymerization may be initiated e.g. with heat, as indicated under the term "resin". The polymerized resin may be a thermoset polymer or an at least partly thermoset polymer.

As for the primary coating 310 or layers (311, 312) thereof, the same reference numerals are used both before polymerization (i.e. hot-pressing) and thereafter. The primary coating 310 of a coated panel 100 (i.e. after hot-pressing the panel), comprises polymer that is obtained by polymerization of the resin of the coating 310 of the preform 105 (i.e. before hot-pressing).

Referring to Fig. 1a, in a preferred embodiment, the primary coating 310 (of the coated panel 100) comprises [i] a first primary layer 311 comprising first primary paper and first primary polymerized resin; and [ii] a second primary layer 312 comprising second primary paper and second primary polymerized resin. The first primary layer 311 comprises (or will comprise) a main surface 350 of the coated plywood panel 100. Thus, in the method, the second primary layer 312 is arranged relative to the first primary layer 311 in between the plywood panel 200 and the first primary layer 311 in the direction of the thickness T. Correspondingly, in an embodiment of a coated panel 100, the second primary layer 312 is arranged relative to the first primary layer 311 in between the plywood part 200 and the first primary layer 311 in the direction of the thickness T. However, as indicated in Fig. 1d, in an embodiment, the primary coating 310 may consist of the first primary layer 311 comprising first primary paper and first primary polymerized resin.

In the method, preferably such a first primary layer 311 is used that the first primary resin of that layer 311 is selected from the group of phenol-amino, amino, and phenolic resins. Melamine and urea resins are examples of amino resins. Preferable, the first primary resin is selected from the group of phenol-amino and amino resins. The first primary resin may comprise melamine resin. When the when the primary coating 310 comprises only the first primary layer 311, the specific mass of the first primary layer 311 is preferably from 200 g/m² to 810 g/m². However, when the primary coating 310 further comprises a second primary layer 312, the specific mass of the first primary layer 311 is preferably from 100 g/m² to 500 g/m², such as 220 g/m² (two significant digits). As indicated by the unit, the term specific mass refers to surface-specific mass, i.e. mass per area.

Typically, the first primary paper constitutes from 17 % to 83 % of the specific weight of the first primary layer 311. In an embodiment, the first primary paper constitutes from 30 % to 70 % of the specific weight of the first primary layer 311. Correspondingly, typically the first primary resin constitutes from 17 % to 83 % of the specific weight of the first primary layer 311. In an embodiment, the first primary resin constitutes from 30 % to 70 % of the specific weight of the first primary layer 311. In addition to paper and resin, the primary coating 310, such as at least a layer 311, 312 thereof, may comprise pigment and/or additive, that may be organic or inorganic. Typically the amount of pigment or additive is small compared to the amount of paper or resin.

In the method, preferably such a second primary layer 312 is used that the second primary resin thereof is selected from the group of the phenol-amino and phenolic resins. Preferably, the second primary resin is a phenol-amino resin or a modified phenol-amino resin. The specific mass of the second primary layer 312 is preferably from 150 g/m² to 310 g/m², such as from 170 g/m² to 310 g/m², such as 190 g/m² (two significant digits).

Typically, the second primary paper constitutes from 25% to 70 % of the specific weight of the second primary layer 312. In an embodiment, the second primary paper constitutes from 30 % to 45 % of the specific weight of the second primary layer 312. Correspondingly, typically the second primary resin constitutes from 30 % to 70 % of the specific weight of the second primary layer 312. In an embodiment, the second primary resin constitutes from 55 % to 70 % of the specific weight of the second primary layer 312.

In case the primary coating 310 comprises at least one layer (311, 312), preferably the primary coating 310 comprises paper and resin selected from the from the group of phenol-amino, amino, phenolic, and melamine resins. Preferably, the specific mass of the primary coating 310 is from 200 g/m² to 810 g/m². More preferably, the primary coating comprises one or two layers having paper. In such a case, paper may constitute from 25 % to 80 %, such as from 30 % to 70 %, e.g. from 45 % to 60 % of the specific weight of the primary coating 310. Resins in total may constitute substantially the rest of the specific weight of the primary coating 310. Resins in total may constitute e.g. from 20 % to 75 %, such as from 30 % to 70 %, e.g. from 40 % to 55 % of the specific weight of the primary coating 310.

These coating materials for the primary coating 310 have the effect that a suitable degree of moisture resistance can be achieved for the coated panel 100. Moreover, the moisture resistance can be achieved in a cost effective manner. For example, in the inner layer 312 of the primary coating 310 a cheaper material can be used than in the upper layer 311. In order to avoid colour variations, the topmost layer 311 of the primary coating 310 should be reasonably thick. Some values have been given above. If needed, the primary coating 310 may comprise at least three layers.

In an embodiment, the first primary coating 310 is free from glass fibres. In an embodiment, the first primary coating 310 is free from carbon fibers, glass fibers, and aramid fibers. Excluding such materials help to keep the manufacturing costs reasonable. In an embodiment, the first primary coating 310 is free from inorganic fibrous material. In an embodiment, the first primary coating 310 of the preform 105 consists of paper and resin. In a corresponding embodiment, first primary coating 310 of the coated panel 100 consists of paper and polymerized resin. This has the effect that the coating can be made reasonably thin, since less material is needed for the primary coating 310.

However, in case a fire-resistant panel is needed, glass fibres may be applied onto the plywood panel. Thus, in an embodiment, the primary coating 310 comprises a layer comprising glass fibres, such as glass fibre felt. The primary coating 310 may comprise e.g. from 15 g/m² to 800 g/m², from 15 g/m² to 350 g/m², from 20 g/m² to 90 g/m², from 25 g/m² to 50 g/m² or from 25 g/m² to 30 g/m² glass fibres. When the primary coating 310 comprises glass fibres, the specific mass of the primary coating may be respectively more than what has been disclosed above. More precisely, the specific masses given above for the primary coating 310 refer to the specific mass of the primary coating 310 without the inorganic fibrous material (e.g. glass fibres) of the primary coating 310. In other words, the surface specific masses given above for the primary coating 310 refer to the total surface specific mass of [i] only resin and paper (of the preform 105) or [ii] only polymerized resin and paper (of the coated panel 100). The total surface specific mass refers to the sum of the components (paper and resin, in particular) contributing to the surface specific mass. In other words, the term "total" does not refer to an integral over the surface.

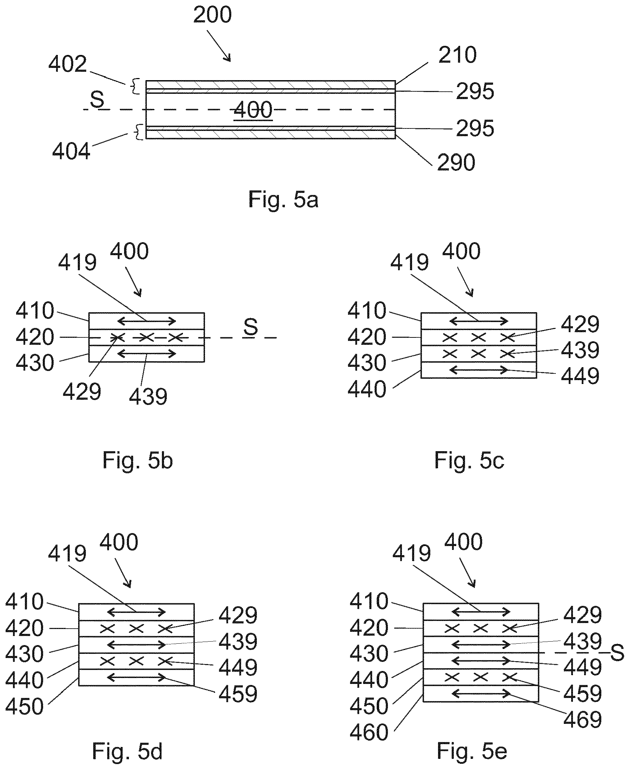

As known, in addition to the first surface veneer layer 210, the plywood panel comprises another, i.e. a second surface veneer layer. The second surface veneer layer is depicted by the reference numerals 220 (Fig. 1a), 230 (Fig. 4a and 290 (Fig. 5a). Thus, no wooden veneer layer (210, 220, 230, 240, 250) of the plywood panel 200 is left on a first side of the second surface veneer layer (220, 230, 290) of the plywood panel 200. As indicated in Fig. 1c, a secondary coating 320 can be arranged on the first side of the second surface veneer layer (220, 230, 290) of the plywood panel 200. The secondary coating 320 forms a layer attached to the second surface veneer layer (220, 230, 290) and covers such a surface of second surface veneer layer (220, 230, 290) that has a surface normal NT that is parallel to the thickness T on the panel 200.

However, typically the visual appearance of the second side of the coated plywood panel is not critical. Thus it is not needed to wet the other main surface of the panel 200 before applying the secondary coating 320 onto that surface. The secondary coating 320 may be applied in the same hot-press process as the primary coating. The secondary coating 320 may be hot-pressed to the panel 200 at the same time the primary coating 310 is hot-pressed to the panel 200.

The secondary coating 320 may comprise paper and resin. The resin of the secondary coating 320 preferably comprises resin selected from the group of phenol-amino, amino, phenolic, and melamine resins. More preferably, the resin of the secondary coating 320 is a phenol-amino resin, such as phenol formaldehyde resin. The specific mass of the secondary coating 320 is preferably from 170 g/m² to 450 g/m².

These coating materials for the secondary coating 320 have the effect that a suitable degree of moisture resistance can be achieved also to the other side. Moreover, the moisture resistance can be achieved in a cost effective manner. If needed, the secondary coating 320 may comprise at least two layers.

In a preferable embodiment, the plywood panel 200 that is being coated (i.e. that has been coated thereby forming a plywood part of a coated panel or that will be coated), comprises a veneer layer comprising hardwood. Particularly preferably, the first surface veneer layer 210 (i.e. first veneer layer), which is being coated with the primary coating 310, comprises hardwood. This has the technical effect that, since the first surface veneer layer 210 is hard, the primary surface 350 of the coated panel 100 is more tolerant to mechanical impacts. As the support for the primary coating 310 is hard, the primary surface 350 is resistant to mechanical impacts, such as puncture by rocks, sand, or other hard objects. Thus, such a coated panel 100 is more reliable in use. In particular, the first veneer layer 210 may comprise one of ash, aspen, basswood, birch, cherry, hickory, mahogany, maple, oak, poplar, lauan, teak, rosewood, okume, and meranti.

In addition, a second veneer layer 220 may comprise hardwood. In particular, the second surface veneer layer (220, 230, 290) may comprise hardwood. Moreover, all the wooden veneer layers of the plywood panel 200 may comprise hardwood. In an embodiment, all the wooden veneer layers of the plywood panel 200 comprise wood from the same wood species. Preferable hardwood species have been disclosed in connection with the first surface veneer layer 210.

Typically at least a part of the plywood panel 200 is cross-laminated. Referring to Fig. 4d, a veneer 231 of a veneer layer 230 comprises grains oriented in a grain direction 239. Referring to Fig. 4c, the corresponding veneer layer 230 may comprise another veneer or other veneers of which grains are oriented in the same direction. These considerations apply to each an all veneer layers (210, 220, ..., 250, 290) of a plywood panel 200.

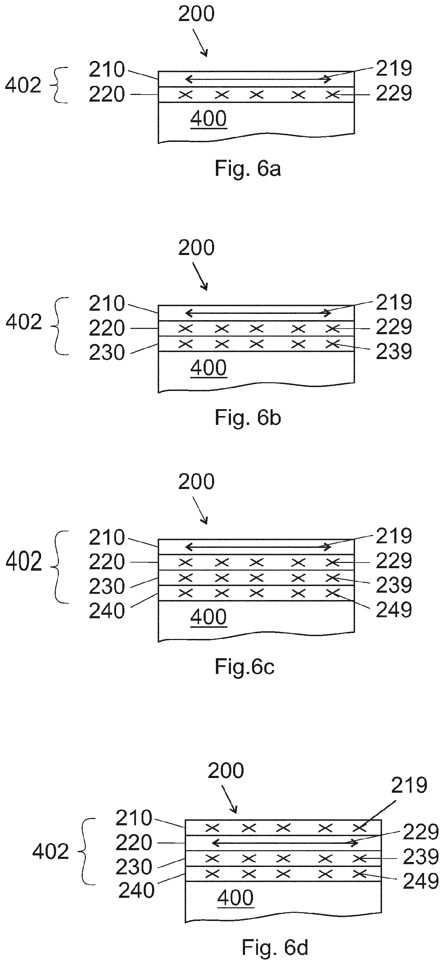

Referring to Figs. 4a and 4b, in a similar manner, the first veneer layer 210 comprises wood having grains oriented in a first grain direction 219. Moreover, a second veneer layer 220 comprises wood having grains oriented in a second grain direction 229. As indicated in Fig. 4e, an angle α is left in between the first grain direction 219 and the second grain direction 229. The angle α may be from 60 to 120 degrees, such as from 85 to 95 degrees, such as 90 degrees. Preferably such an angle is left in between the grains of the first veneer layer 210 and a veneer layer neighbouring the first veneer layer 210 (e.g. 220 in Fig. 4a). Herein the term neighbouring veneer layer refers to such a layer that no other veneer layer is left in between the corresponding two veneer layers. In Fig. 4a, the horizontal arrow (grain direction 219) indicates a direction in the plane of the figure and a cross (grain direction 229) indicates a direction perpendicular to the plane of the figure. Similar notation applies to Figs. 5a to 5e and 6a to 6c. When the grain directions of two neighbouring veneer layers (e.g. 210 and 220; or 220 and 230 in Fig 4a) form such an angle α, such veneers are often said to be cross-laminated.

However, not all neighbouring layers need to be cross-laminated relative to each other. For example, figures 5a to 5e indicate plywood panels having a core 400; a first surface part 402 comprising the first surface veneer 210; and a second surface 404 part comprising the second surface veneer 290, as indicated in Fig. 5a. The surface parts 402, 404 may comprise also other veneers. Here the term core 400 refers to a plywood structure comprising veneer layers 410, 420, 430, 440, 450, 460, and adhesive in between these layers. In an embodiment, the core 400 comprises at least two veneer layers. In the figures 5b to 5e, the core 400 comprises at least three veneer layers. Figures 5b to 5e show the structure of the core 400 in more detail. Referring to Figs. 5b to 5d, in an embodiment the core 400 is symmetric about a plane S having a surface normal that is parallel to the thickness T of the plywood panel 200. Typically also the plywood panel 200 is symmetric about the plane S.

As indicated in Figs. 5b and 5d, when the number of veneer layers (410, 420, ..., 450) of the core 400 is odd (i.e. 2xN+1, wherein N is an integer at least zero), the core 400 may be free from such veneers that have a grain direction that is parallel to the grain direction of a neighbouring veneer layer of the core 400. Also the surface parts 402, 404 may be arranged according to the same principle, whereby, in an embodiment wherein the number of veneer layers of the panel 200 is odd, the panel 200 may be free from such veneers that have a grain direction that is parallel to the grain direction of a neighbouring veneer layer of the panel 200.

As indicated in Figs. 5c and 5e, when the number of veneer layers (410, 420, ..., 460) of the core 400 is even (i.e. 2xN, wherein N is an integer at least one), the core 400 may comprise two middle veneer layers (i.e. the layers 420 and 430 in Fig. 5b; 430 and 440 in Fig. 5e) having mutually parallel grain directions. Except for the two middle veneer layers, the core 400 may be free from such veneers that have a grain direction that is parallel to the grain direction of a neighbouring veneer layer of the core 400. Also the surface parts 402, 404 may be arranged according to the same principle, whereby, in an embodiment wherein the number of veneer layers of the panel 200 is even, except for the middle veneer layers, the panel 200 may be free from such veneers that have a grain direction that is parallel to the grain direction of a neighbouring veneer layer of the panel 200.

However, to strengthen the panel 200, the panel 200, e.g. the surface parts 402, 404 thereof, may have veneer layers, wherein the grain directions of neighbouring veneer layers are parallel. Referring to Figs. 6a to 6c, the first surface part of the plywood panel 200 may comprise two (Fig. 6a), three (Fig. 6b) or four (Fig. 6c) veneer layers, including the first surface veneer 210. Typically, as indicated in Figs. 6a to 6c the topmost two layers (layers 210 and 220 in the figures) of the panel are arranged such the their grain directions form the aforementioned angle α (Fig. 4e). This improves the isotropy of the surface of the plywood panel 200. The isotropy of the surface of the plywood panel 200 is preferable when the panel 200 is being coated, since also the primary coating 310 is reasonably isotropic, at least in its plane, which has a surface normal parallel to the thickness. In this way, the cross-laminated structure at least on the surface improves the reliability of the primary coating 310 of the coated panel 100.

However, a number of neighbouring veneer layers starting from the veneer layer that is a neighbouring layer to the first surface veneer layer 210 can be oriented such that the grain direction of these layers is parallel. The number of such layers may be e.g. two, three, or four. This improves the strength properties of the panel 200. In the alternative, three topmost veneer layer may be cross-laminated, and the grains of a number of neighbouring veneer layers starting from the innermost of these three layers may be oriented in parallel (see Fig. 6d).

The number of veneer layers may be chosen according to the needed strength. In an embodiment, the plywood panel 200 comprises at least five veneer layers 210, 220, 230, 240, 250 comprising wood. The veneer layers are arranged relative each other in the direction of the thickness T on the panel. In an embodiment, the plywood panel 200 comprises at most 35, such as from 3 to 35, veneer layers 210, 220, 230, 240, 250 comprising wood. The veneer layers are arranged relative each other in the direction of the thickness T. The thickness of the plywood panel to be coated or the plywood part of a coated panel may be e.g. from 4 mm to 50 mm.

Referring to Fig. 1b, preferably the coated plywood panel 100 comprises on a first side a tongue 370. Herein the first side refers to a side of the coated plywood panel 100 that [a] has a surface normal NL that is parallel to the length L plywood part 200 or [b] has a surface normal NW that is parallel to the width W of the plywood part 200. Correspondingly, in an embodiment, the plywood panel 200 that is being coated, comprises, before said coating, a tongue 370 arranged on a first side of the plywood panel 200, wherein the first side has [a] a surface normal NL that is parallel to the length L plywood panel 200 or [b] a surface normal NW that is parallel to the width W of the plywood panel 200. However, the tongue 370 may be machined to the coated plywood panel 100 after said coating.

Preferably, the coated plywood panel 100 comprises, on a second side, a groove 380 (see Fig. 1b). Herein the second side refers to a side of the coated plywood panel 100 that has a surface normal that is parallel to the length or the width of the plywood part 200 and that is opposite to the first side, which comprises the tongue 370. Correspondingly, in an embodiment, the plywood panel 200 that is being coated comprises, before said coating, a groove 380 arranged on a second side of the plywood panel 200, wherein the second side is opposite to the first side, and the tongue 370 is configured to fit in the groove 380. However, the groove 380 may be machined to the coated plywood panel 100 after said coating.

The tongue-groove joint has the technical effect that two similar coated panels can be attached tightly to each other. This has a synergic effect with the small colour variations of the coated plywood panel 100, because, when two similar panels with small colour variations are attached tightly to each other, the panels form a single uniform surface, wherein the seam is hard to observe by naked eye. Figure 1e shows an arrangement comprising a first coated panel 100a and a second coated panel 100b that are similar to each other. Both coated panels 100a and 100b have a tongue 370 and a groove 380, wherein the tongue of the first coated panel 100a is arranged in the groove of the second coated panel 100b.

In addition, the coated panel 100 (or the panel 200) may comprise another tongue arranged on a third side of the plywood part, wherein the third side has a surface normal that is perpendicular to the thickness T of the plywood part and perpendicular to the surface normal of the first side. The coated panel 100 (or the panel 200) may further comprise another groove arranged on a fourth side of the plywood part, wherein the fourth side is opposite to the third side. In this way, the coated panels 100 can be used to cover a large area by arranging panels side by side and next to each other in both the directions on length and width without the resulting area having seam visual to the naked eye.

Referring to Fig. 3b, it has been observed that the method is sensitive to the amount of water 820 applied onto the main surface 201 of the panel 200. The term "amount" refers to the surface specific amount expressed in unit of mass per area, e.g. grams per square meter. The corresponding area is the area of the main surface 201 of the panel 200, onto which water is applied. As indicated in Fig. 2a, when no water is applied (or too little water is applied), many of the small protrusions 710 will be uneven, resulting in a light primary surface 350 with some colour variations, at least from panel to another panel. However, as indicated in Fig. 2c, when too much water is applied, large areas with colour variations will show on the primary coating 310 of the coated panel 100. It has been found that a proper amount of water 820 further depend on the total amount of resin(s) within the primary coating 310 of the preform 105. It has been found that a suitable amount of water (g/m²) is from 5 % to 60 % of the specific total amount of resin(s) (g/m²) of the primary coating. More preferable ranges include from 6 % to 54 %, such as from 10 % to 50 %. Typically, such a primary coating 310 comprises about 200 g/m² resin(s). Therefore, in an embodiment, the amount of water 820 may be e.g. from 10 g/m² to 120 g/m², such as 12 g/m² to 108 g/m² or such as 20 g/m² to 100 g/m²; corresponding to the aforementioned percentages.

The water may be arranged onto the main surface 201 by spraying, brushing, pouring, using a roll coater, or by other suitable means. However, spraying is preferred, since then the amount of water can be reasonably accurately controlled, and the water is spread on the surface in a reasonably uniform manner.

The plywood panel 200 may have been manufactured as known to a skilled person. The panel 200 may be stored before it is coated. In the alternative, a panel 200 may be coated without storing after the panel 200 has been manufactured.

As indicated above, application of water improves the flowability of the resin of the primary coating 310. It seems that as the water gets mixed with the resin, the flowability increases. Moreover, it is possible, that the water levels out the roughness of the wooden surface 201, whereby the primary coating 310 becomes applied onto a more even surface, which decreases the amount of colour variations. Furthermore, is possible, that the water softens the wooden surface 201, whereby the primary coating 310 becomes applied onto a softer surface with a hard and even pressing surface 510, which in combination decrease the amount of colour variations. Still further, by applying water, the temperature of the primary coating 310 will be somewhat lower during hot-pressing that without the water. This also improves the flow, as the polymerization of the resin occurs somewhat more slowly.

Tests were performed to verify that the added water indeed increases the flowability of the material of the coating 310. In the tests, circular samples having a diameter of 45 mm were cut from the coating material. The sample was arranged in between two release papers. Water was sprayed or was not sprayed onto one of the release papers. The amount of water was varied within limits that cover the aforementioned preferable ranges of the amount of water. The coating material was hot-pressed in between the release papers. The amount of flown resin was measured. The amount of flown resin may be defined as the mass of the resin that flows over the edges of the initial 45 mm sample. In the following, this mass is given in proportion to the total mass of the coating 310. In the alternative, the amount of flown resin may be defined as the difference between the diameter of the sample after hot-pressing the coating, and the initial diameter, i.e. 45 mm. The tests were conducted both such that the primary coating 310 consisted of only one layer 311, and such that that the primary coating 310 consisted of two layers 311 and 312. In both the tests, the layer 311 was a 220 g/m² sheet comprising paper impregnated with amino resin. In the second test, the layer 312 was a 190 g/m² sheet comprising paper impregnated with phenol-amino resin.

As for the results, when the primary coating 310 consisted of only one layer 311, the proportional mass of flown coating material increased from 4 w-% to 8 w-% when the amount of applied water (g/m²) was increased from 0 % to 70 % relative to the amount of the resin (g/m²) of the coating. At the same time, the change of the diameter increased from 1 mm to 3 mm (i.e. the diameter of the final sample was from 46 mm to 48 mm).

When the primary coating 310 consisted of only two layers 311 and 312, the proportional mass of flown coating material increased from 4 w-% to 12 w-% when the amount of applied water was increased from 0 % to 40 % relative to the amount of the resins of the coating 310 (i.e. resins of the layers 311 and 312). At the same time, the change of the diameter increased from 1 mm to 8 mm (i.e. the diameter of the final sample was from 46 mm to 53 mm).

These results clearly indicate that by applying water onto a surface of a plywood panel before coating, the flowability of the coating (310, 311, 312) comprising resin can be increased.

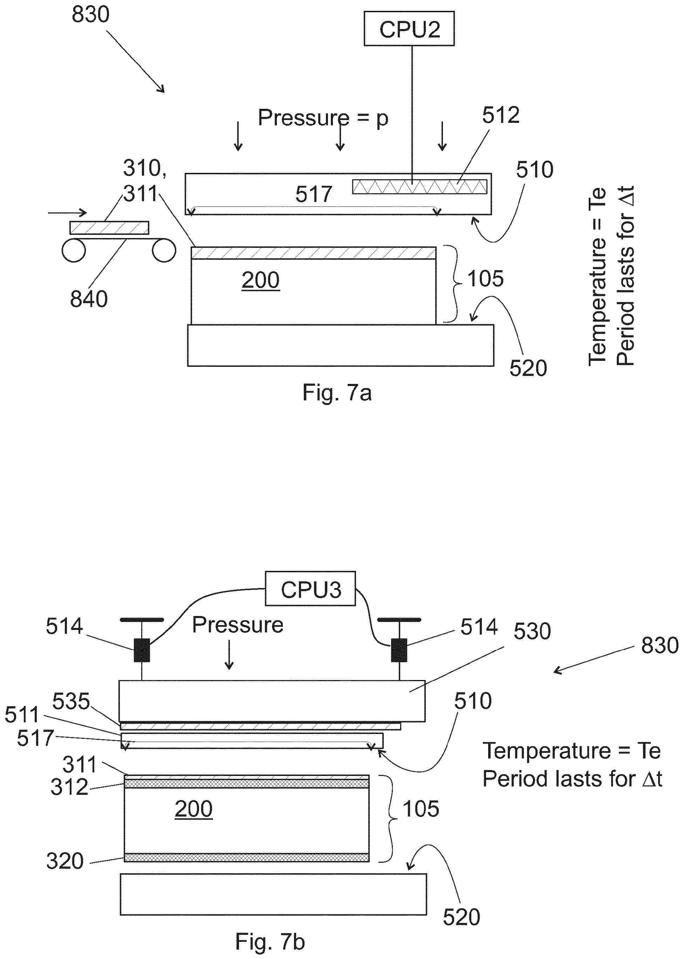

Hot-pressing of the preform 105 is shown in Figs. 3d, 7a, and 7b. In Fig. 3d, the primary coating 310 is formed of a first primary layer 311 and a second primary layer 312. The preform is free from a secondary coating 320. In Fig. 7a, the primary coating 310 consists of the first primary layer 311. Fig. 7b shows the application of a secondary coating 320.

By hot-pressing, the preform 105 for the coated panel is pressed to the coated panel 100. The preform 105 is hot-pressed in between a first pressing surface 510 and a second pressing surface 520. In hot-pressing, the primary coating 310 faces the first pressing surface 510. However, as indicated in the figures, the pressing surface 510 may be larger than the main surface 201 of the panel. Correspondingly, a pressing part 517 of the pressing surface 510 is configured to press the primary coating. Correspondingly, the pressing part 517 of the pressing surface 510 is configured make a contact with the primary coating 310 during hot-pressing. When the primary coating 310 comprises multiple layers, the first primary layer 311 is left in between the other layer (or the other layers) of the primary coating and the first pressing surface 510. Hot-pressing comprises pressing, at a temperature Te, using a pressure p, and for a period of time Δt, the preform 105 for the coated panel 100 to form the coated plywood panel 100. H

The temperature Te may be e.g. from 110 °C to 190 °C. The temperature may be from 120 °C to 150 °C. Herein the temperature refers to the temperature of the pressing surfaces 510, 520, and/or the temperature of the environment. The time Δt may be e.g. from 3 minutes to 15 minutes, such as from 5 to 10 minutes. Thus, typically also the plywood panel will be heated during hot pressing. Clearly, at least the primary coating 310 will be heated. The pressure p may be e.g. from 0.7 MPa to 3.5 MPa, such as from 1.5 MPa to 2.5 MPa. The pressure refers to the pressure (i.e. force per area; above atmospheric), by which the primary coating 310 and the plywood panel 200 are pressed against each other.

Referring to Fig. 7b also the secondary coating 320 can be applied in a hot-pressing process. In such a case the method comprises arranging available a secondary coating 320 comprising paper and resin; and arranging the plywood panel 200 in between the secondary coating 320 and the primary coating 310, thereby adding the secondary coating 320 to the preform 105 for the coated plywood panel 100. Thereafter, the preform 105 may be hot-pressed to form the coated plywood panel. In the above, a coated plywood panel (to which a primary coating has already be applied) may serve as a preform 105, and the secondary coating can be applied to such a preform. Preferably, however, the plywood panel 200 is arranged in between the secondary coating 320 and the primary coating 310 before the hot pressing, wherein the primary coating is attached to the panel 200. Thus, preferably, the primary 310 and the secondary 320 coatings are attached to the panel at the same time.

As indicated above, to improve the visual appearance and to increase the friction of the primary surface 350, the primary surface preferably comprises first protrusions 710 and second protrusions 720 (see Figs. 2a and 2b). Such protrusions can be made in the hot-pressing process by using a pressing part 517 having corresponding indentations.

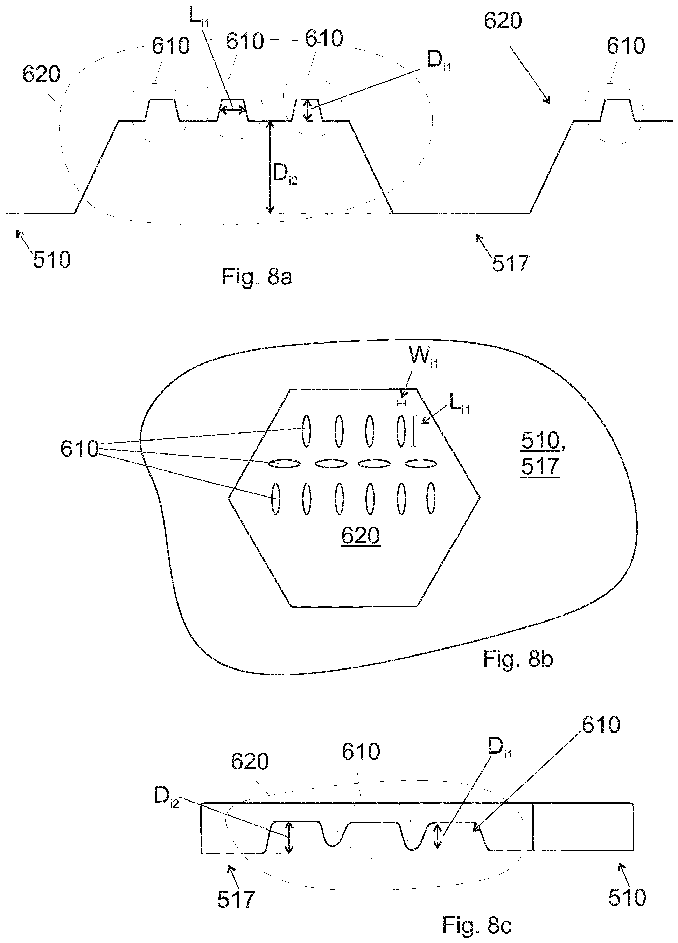

Fig. 8a shows a side view of a first pressing surface 510 having a pressing part 517. Fig. 8b shows a top view of the first pressing surface 510 having the pressing part 517 of Fig. 8a. As indicated in the figures, the pressing part 517 comprises first indentations 610 having a depth Dᵢ₁ in the direction of the surface normal of the pressing surface, a length Lᵢ₁ perpendicular to the depth Dᵢ₁ and a width Wᵢ₁ perpendicular to the depth Dᵢ₁ and the length Lᵢ₁.

It has been found that the friction of the primary surface 350 is well increased provided that the first indentations 610, which will produce the first protrusions 710 of the primary surface 310 in the hot-pressing, have a proper size. In particular, the size is proper in this sense, when the smaller of the length Lᵢ₁ and the width Wᵢ₁ is from 0.3 mm to 1.5 mm, such as from 0.4 mm to 1.3 mm. Preferably also the larger of the length Lᵢ₁ and the width Wᵢ₁ is from 0.7 mm to 2.5 mm, such as from 1.0 mm to 2.0 mm. For an indentation Di, the width is not necessarily smaller than the length, since it is customary to define the directions of length and width relative to the panel (or the pressing part), not individually for each indentation. Preferably, the cross sectional area of the first indentation 610 on a plane having a surface normal that is parallel to the depth Dᵢ₁ is from 0.2 mm² to 4 mm², such as from 0.3 mm² to 3 mm².

The depth Dᵢ₁ is from 0.05 mm to 0.5 mm, such as from 0.1 mm to 0.2 mm. Moreover, the depth is measured from a location at the boundary of the first indentation 610, which, as indicated in Fig. 8a, may be on the bottom of a second indentation 620. The second indentations need not be used for increased friction, but can be used e.g. for improved visual appearance. However, as indicated above, the used resin does not necessarily fill these indentations well.

As indicated in Fig. 8a, in an embodiment, the pressing part 517 comprises a second indentation 620 such that at least some of the first indentations 610 penetrate into the pressing part 517 at the second indentation 620. The second indentation 620 may have a second depth Dᵢ₂. The second depth Dᵢ₂ is measured from a location at the boundary of the second indentation 620. The second depth Dᵢ₂ may be from 0.1 mm to 1 mm.

The second indentation 620 may be significantly larger that the first indentations 610. For example, the second indentation 620 may have an area of at most 500 mm², such as at most 300 mm². The second indentation may have the shape of a polygon, such as a regular polygon. As indicated by the protrusions of Fig. 2b, the second indentation may have the shape of the regular hexagon. In Fig. 2b, the length of the diagonal of the hexagon is 10 mm, whereby the area is about 65 mm². The second indentation 620 may be smaller or larger, e.g. by a factor of two. In an embodiment, the area of the second indentation 620 is at least 25 mm², such as at least 40 mm². This ensures a suitable number of smaller protrusions 710 on the larger protrusions 720.

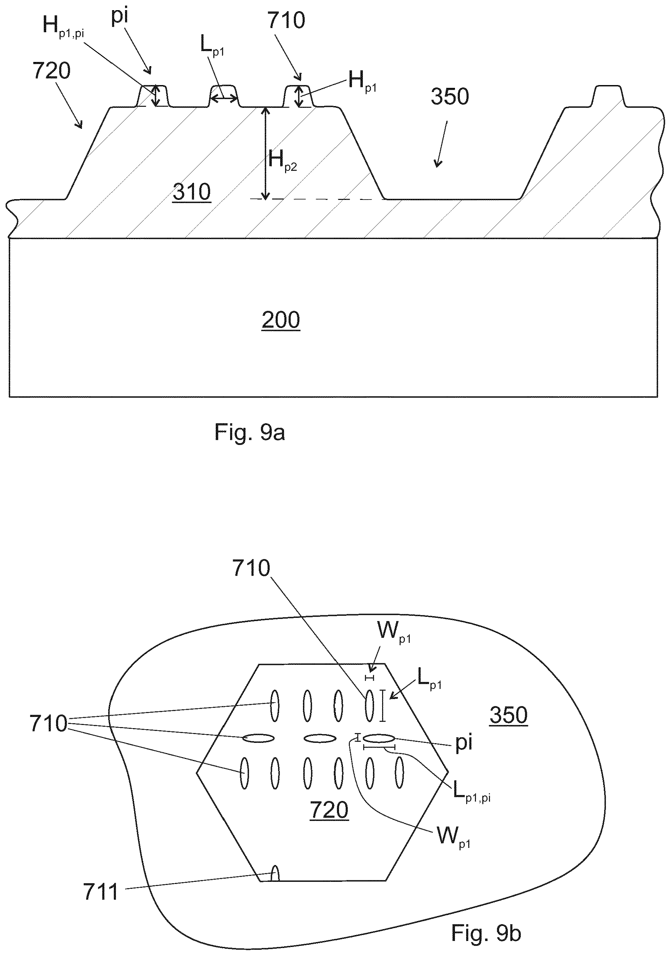

When the flowability of the material of the primary coating 310 is sufficiently high, the resin of the material of the coating flows into the indentations (610, 620) of the pressing surface 510 during hot pressing. In such a case, the primary surface 350 of the coated panel comprises corresponding protrusions 710, 720. As an example, Fig. 9a shows the primary surface 350 obtained with the pressing surface 510 of Fig. 8a. As indicated, all the first 610 and second 620 indentations have been filled with the material of the primary coating 310 thereby forming the primary surface 350. However, as evidenced by Figs. 2a and 2b, when the flowability of the material of the primary coating 310 is not sufficient, the indentations 710, 720, in particular the smaller indentations (the first indentations 710) are not filled. The corresponding first protrusions 710 may be crater-like and uneven. In contrast, the first protrusions of Fig. 2b are even, i.e. flat, on top. Moreover, at least some first protrusions 710 that protrude from one and the same second protrusion are evenly protruded; i.e. they are even at their tops, and they all are equally high.

In this way, in an embodiment, the protrusions 710 that are even on top have the shape of a solid (i.e. completely filled) generalized cylinder. A generalized cylinder refers to an object extending in a direction of height and having the same cross section at all heights. The cross section is on a cross sectional plane having a surface normal that is parallel to the height. Unlike in a regular cylinder, in a generalized cylinder, the cross-section needs not to be circular. The cross-section of the generalized cylinder is preferably a convex area. The protrusions 710 that are even on top may e.g. be solid elliptic cylinders, or solid rounded prisms. For example, the shape of the cross-section of the protrusions may be a rounded rectangle.

The shape of the even top of some of the first protrusions 710 may be further described by the cross-sectional area of the top plane of the even protrusions 710. In particular, those first protrusions that are even on top have such a cross section on a plane that has a surface normal that is parallel to the height of the first protrusion that the cross section comprises the top of the protrusion 710 and that the area of the cross section is at least 50 % of the area limited by the path that surrounds the cross section. The path may refer to the circumference, i.e. the path that defines the perimeter of the cross section. The path may be the shortest path that surrounds the cross section. In an embodiment, those first protrusions that are even on top have such a cross section on a plane that has a surface normal that is parallel to the height of the first protrusion that the cross section comprises the top of the protrusion, and that the area of the cross is from 0.2 mm² to 4 mm², such as from 0.3 mm² to 3 mm².

As a result of the crater-like first protrusions 710, the primary surface 350 of Fig. 2a is lighter than the primary surface 350 of Fig. 2b. In addition to lighter appearance, the colour variations within the primary surface 350 of Fig. 2a are higher than of the primary surface 350 of Fig. 2b. To this end, tests were performed to verify that the added water indeed makes the primary surface 350 appear darker when water has been added during manufacturing onto a surface of the plywood panel, and that the addition of water decreases the colour variances. In these tests, panels were manufactured such that the primary coating 310 consisted of two layers 311 and 312. The layer 311 was a 220 g/m² sheet comprising paper impregnated with amino resin and the layer 312 was a 190 g/m² sheet comprising paper impregnated with phenol-amino resin. Water was not added or was added from 10 % to 40 % of the amount of the resins of the coating (g/m²)/(g/m²). Reflectance of the primary surface 350 was measured from multiple points at the temperature 20 °C. When no water was added on the plywood, the average reflectance (i.e. L-value) of the primary surface 350 was 55.3 with a standard deviation of 0.26. When water was added in the aforementioned amount on the plywood, the average reflectance (i.e. L-value) of the primary surface 350 was from 54.2 to 54.7 and the standard deviation ranged from 0.11 to 0.17. These tests indicate that by adding water during manufacturing, the deviation of the reflectance of the primary surface 350 can be decreased. This can be seen as more uniform colour of the primary surface 350. Moreover, since the deviation within a panel decreases, also the colour variations between two different panels decrease. Thus, these tests bear evidence that by applying water, colour variations within a panel and in between different panels can be diminished. Similar results were found also at a higher temperature.

Referring to Figs. 9a and 9b the primary coating 310 of a coated plywood panel 100 forms a primary surface 350 of the coated plywood panel 100. The primary surface 350 faces away from the plywood part 200 of the coated plywood panel 100. In an embodiment the primary surface 350 comprises first protrusions 710 having a height Hₚ₁; a length Lₚ₁ that is perpendicular to the height Hₚ₁; and a width Wₚ₁ that is perpendicular to the height Hₚ₁ and the length Lₚ₁.

More specifically, denoting one specific first protrusion 710 with pi (i.e. p1, p2, p3, p4, ...; for first protrusion number i; as indicated in Fig. 2a), that specific first protrusion pi has a height H_{p1,pi}; a length L_{p1,pi} that is perpendicular to the height H_{p1,pi}; and a width W_{p1,pi} that is perpendicular to the height H_{p1,pi} and the length L_{p1,pi}.

To improve visual quality of the primary surface 350, and to increase friction thereof, the size of the first protrusions 710 should be relatively small. In an embodiment, the smaller of the length Lₚ₁ and the width Wₚ₁ is from 0.3 mm to 1.5 mm, such as from 0.4 mm to 1.3 mm. In the embodiment, or another embodiment, the larger of the length Lₚ₁ and the width Wₚ₁ is from 0.7 mm to 2.5 mm, such as from 1.0 mm to 2.0 mm. Preferably, the cross sectional area of the first protrusion 710 on a plane having a surface normal that is parallel to the thickness of the coated panel is from 0.2 mm² to 4 mm², such as from _{0.3} mm² to 3 mm². In the embodiment, or another embodiment, the height Hₚ₁ of the first protrusions 710 is from 0.05 mm to 0.5 mm, such as from 0.1 mm to 0.2 mm.

More specifically, each one pi of the first protrusions (710, pi) has a height H_{p1,pi}, which is directed parallel to thickness T of the plywood part; a length L_{p1,pi} that is perpendicular to the height H_{p1,pi} and a width W_{p1,pi} that is perpendicular to the height H_{p1,pi} and the length Lₚ₁. Moreover, for each of the first protrusions pi the smaller of the length L_{p1,pi} and the width W_{p1,pi} is from 0.3 mm to 1.5 mm, preferably 0.4 mm to 1.3 mm. Preferably also, for each of the first protrusions pi the larger of the length L_{p1,pi} and the width W_{p1,pi} is from 0.7 mm to 2.5 mm, preferably 1.0 mm to 2.0 mm. Preferably, the cross sectional area of each one of the protrusions pi on a plane having a surface normal that is parallel to the thickness of the coated panel is from 0.2 mm² to 4 mm², such as from 0.3 mm² to 3 mm². Preferably also, for each of the first protrusions pi the height H_{p1,pi} is from 0.05 mm to 0.5 mm, such as from 0.1 mm to 0.2 mm.

The term "each" here is not restricting; i.e. in addition to those first protrusions having the aforementioned size, the primary surface 350 may comprise further protrusions, in particular the second protrusions 720. Moreover, the primary surface 350 may comprise further protrusions, having a different size. For example, some other protrusions 711 (see Fig. 9b) may be partial protrusions, i.e. their shape may form a part of the shape of the first protrusion 710. Clearly, such partial protrusions 711 may be smaller than the aforementioned value. However, in an embodiment, the coated panel comprises a number N1 of first protrusions 710 each of which having a size within the aforementioned limits. In an embodiment, the coated panel comprises a number N1 of first protrusions 710 each of which being equally large and having a size within the aforementioned limits. As indicated below, the number N1 may be e.g. at least 10000, at least 20000, or at least 40000.

Some of the first protrusions 710 may protrude from a second protrusion 720 comprised by the coated panel 100. Preferably, the second protrusion 720 has a cross sectional area of at most 500 mm², such as at most 300 mm². Moreover, in an embodiment, each one of the first protrusions 710 that protrude from the second protrusion 720 has a cross sectional area of at most 4 mm². Herein the cross sectional area refers to an area of a cross section on a cross sectional plane that has a surface normal that is parallel to the height of the protrusions 710, 720. Preferably, the second protrusion 720 has the shape of a polygon, such as a regular polygon, e.g. a regular hexagon. Fig. 2b, the length of the diagonal of the hexagon is 10 mm, whereby the area is about 65 mm². In an embodiment, the area of the second protrusion 720 is at least 25 mm², such as at least 40 mm². A length of a diagonal of a polygonal second protrusion may be e.g. from 5 mm to 20 mm.

The primary surface 350 of the coated plywood panel comprises a first number N1 of first protrusions 710 (either crater-like or even). A second number N2 of those first protrusions 710 are even on their top. The proportion N2/N1 is at least 2/3, preferably at least 75 %, at least 85 % or at least 95 %. The second number N2 may be the number of first protrusions 710 that are even on top with the meaning discussed above. The second number N2 may be the number of evenly protruding first protrusions 710. The number N1 of the first protrusions in a panel is typically large. For example, a panel may comprise at least 10000, at least 20000, or at least 40000 first protrusions 710. Correspondingly, a coated panel may comprise at least 7000, at least 13000, or at least 27000 first protrusions 710 that are even on their top. A width of the coated panel may be e.g. from 1000 mm to 2000 mm. A length of the coated panel may be e.g. from 2000 mm to 4000 mm.

Even if the figures show only oval first protrusions 710, also other shapes are possible in light of the function of the first protrusions 710. The first protrusions may be circular, oval, polygonal or rounded polygonal. Other possibilities include sectors or segments of circular or oval shapes. The protrusion may comprise to edges meeting each other at angle, which may be small, e.g. at most 45 degrees or at most 30 degrees to indicate a direction. The angle may be e.g. an angle of a polygon. In this way, the polygon may e.g. resemble an arrow. A polygon may refer to a regular polygon.

Referring to Figs. 3a to 3d, the method is preferably carried out using an arrangement for coating a plywood panel 200. The arrangement comprises an applicator 810 configured to apply water 820 onto a main surface 201 of a plywood panel 200 to form a wet main surface 202 of the plywood panel 200. The arrangement further comprises a hot-pressing apparatus 830 configured to apply a primary coating 310 onto the wet main surface 202 of the plywood panel 200 in a hot-pressing process. The arrangement comprises a coating unit 840 configured to arrange the components (e.g. the layers 311, 312) of the primary coating 310 onto the wet main surface 202 of the plywood panel 200. In case the primary coating 310 is constituted by only one layer 311, the components of the primary coating 310 refer to the paper support and the resin of the only layer 310. The coating unit 840 may be arranged on a line before the hot-pressing apparatus 830, as indicated in Fig. 3c. In the alternative, the coating unit 840 may be arranged as part of the hot-pressing apparatus 830 as indicated in Fig. 7a.

The plywood panel 200 may be conveyed to the applicator 810 with a first conveyor 822, which is comprised by the arrangement for coating a plywood panel 200. The plywood panel 200 may be conveyed from the applicator 810 to the hot-pressing apparatus 830 using a conveyor, such as the first conveyor 822 or another conveyor 824, which is comprised by the arrangement for coating a plywood panel 200. In such a case, the hot-pressing apparatus 830 may comprise the coating unit 840.

Referring to Fig. 3c and 3d, the plywood panel 200 may be conveyed from the applicator 810 to the coating unit 840 using a conveyor, such as the first conveyor 822 or another conveyor 824, which is comprised by the arrangement for coating a plywood panel 200. Moreover, the plywood panel 200 may be conveyed from the coating unit 840 to the hot-pressing apparatus 830 using a conveyor, such as the first conveyor 822, the other conveyor 824, or a further conveyor 826, which is comprised by the arrangement for coating a plywood panel 200.

The hot-pressing apparatus 830 comprises the first pressing surface 510 and the second pressing surface 520. The preferable shapes and other features of the pressing surfaces, in particular the first pressing surface 510, as discussed above in the context of the method apply also in the context of the arrangement for coating a plywood panel 200. Moreover, the hot-pressing apparatus 830 is configured to press the components (e.g. the layers 311, 312; or the paper support and the resin of the only layer 311) of the primary coating 310 and the plywood panel 200 against each other using at least a pressing part 517 of the first pressing surface 510 and a part of the second pressing surface 520 in such a way that the coating 310 faces the first pressing surface 510.

The hot-pressing apparatus 830 may comprise a control unit CPU1 (Fig. 3b) that is configured to control the amount of water applied onto the main surface 201 of the panel 200 with the applicator 810. In an embodiment, the control unit CPU1 is configured to receive information indicative of a target amount of water to be applied on to the plywood panel 200 and to control the applicator 810 in such a way that the amount of water that is applied onto a main surface of a plywood panel 200 correspond to the target amount of water to be applied on to the plywood panel. The information indicative of a target amount of water to be applied on to the plywood panel 200 may comprise the target value (g/m²) or the information may comprise the target percentage relative to the total specific mass of resin of the coating in connection with total specific mass of resin. The hot-pressing apparatus 830 may comprise means for measuring the total specific mass of the coating 310. In this way, the hot-pressing apparatus 830 may be configured to automatically determine the proper amount of water. The hot-pressing apparatus 830 may comprise a user interface for changing the target amount of water to be applied on to the plywood panel. In the alternative, such a user interface may be used to give the target value to the processing unit.

Preferably the applicator 810 comprises nozzles 811 configured to spray water onto the main surface 201 of the panel 200.

The arrangement for coating a plywood panel may comprise a heater 512 (Fig. 7a) configured to heat at least a part of the first pressing surface 510. The heater may e.g. heat a pressing support 530, which further heats a mantle 511. The arrangement may comprise a heater (the same or another heater) configured to heat at least a part of the second pressing surface 520. The hot-pressing apparatus 830 comprises means 514 (Fig. 7b), such as a hydraulic cylinder or a screw, for moving the first pressing surface 510 and the second pressing surface 520 towards each other. The hot-pressing apparatus 830 may comprise a control unit CPU2 (or the same control unit CPU1 may be used for the purpose) that is configured to control the temperature within the hot-pressing apparatus 830 and/or the temperature of a pressing surface (510, 520). The control unit CPU2 in configured to control the means 512 for controlling the temperature. The hot-pressing apparatus 830 may comprise a control unit CPU3 (the same CPU1, the other CPU2, or a further unit) that is configured to control the force or pressure that the first pressing surface 510 applies on the preform 105 of the coated panel 100 during hot-pressing. The control unit CPU3 is configured to control the means 514 for moving the first pressing surface 510 and the second pressing surface 520 towards each other. The control unit CPU3 may be configured to control the means 514 for moving the first pressing surface 510 and the second pressing surface 520 towards each other in such a way that a pressure of from 0.7 MPa to 3.5 MPa, such as from 1.5 MPa to 2.5 MPa is applied to the coating 310.

Typically the pressing surface 510 is a surface of a mantle 511. The mantle 511 covers a pressing support 530. In this way, the mantle 511 comprises the indentations 610. Moreover, the mantle 511 can be easily changed, e.g. if other types of protrusions need to be pressed to other coated panels with the same hot-pressing apparatus 830. The mantle 511 is preferably made of material having good thermal conductivity, in order to conduct heat from the support 530 to the pressing surface 510 and further to the resin of the primary coating 310. The thermal conductivity of the material of the mantle 511 may be e.g. at least 1 W/m·K at the temperature 20 °C.

In addition to the mantle 511, a bolster 535 may be used in between the pressing support 530 and the mantle 511. The bolster may level out the pressure that the mantle 511 imposes on the primary coating 310 (i.e. the layers 311 and 312 in Fig. 7b).

## Claims

1. A coated plywood panel (100), the coated plywood panel (100) comprising
- a plywood part (200) and
- a primary coating (310), the primary coating (310) comprising paper and polymerized resin, wherein
- the primary coating (310) is attached to the plywood part (200), and
- the primary coating (310) comprises
• a first number (N1) of first protrusions (710, pi) protruding from the primary coating (310) away from the plywood part (200) such that
• a second number (N2) of the first protrusions (710, pi) are even on their top, wherein
- each one (pi) of the first protrusions (710, pi) have
• a height (H_{p1,pi}),
• a length (L_{p1,pi}) that is perpendicular to the height (H_{p1,pi}) and
• a width (W_{p1,pi}) that is perpendicular to the height (H_{p1,pi}) and the length (Lₚ₁) such that
- the smaller of the length (L_{p1,pi}) and the width (W_{p1,pi}) is from 0.3 mm to 1.5 mm,
- the larger of the length (L_{p1,pi}) and the width (W_{p1,pi}) is from 0.7 mm to 2.5 mm, and
- the height (H_{p1,pi}) is from 0.05 mm to 0.5 mm,
wherein
- the ratio (N2/N1) of the second number (N2) to the first number (N1) is at least 2/3.

2. The coated plywood panel (100) of claim 1, wherein
- the plywood part (200) has a length (L), a width (W), and a thickness (T), wherein the thickness (T) is less than the smaller of the length (L) and the width (W), the plywood part (200) comprising
- a first veneer layer (210) comprising wood,
- a second veneer layer (220) comprising wood, the second layer (220) arranged relative to the first layer (210) in the direction of the thickness (T), and
- adhesive (295) in between the first veneer layer (210) and the second veneer layer (220), wherein
- no wooden veneer layer (210, 220, 230, 240, 250) of the plywood part (200) is left on a first side of the first veneer layer (210), whereby the first veneer layer (210) forms a first surface veneer layer (210) of the plywood part (200),
- the primary coating (310) forms a layer attached to the first side of the first veneer layer (210) and covering such a surface of the first veneer layer (210) that has a surface normal that is parallel to the thickness (T);
preferably,
- the first veneer layer (210) comprises hardwood, such as one of ash, aspen, basswood, birch, cherry, hickory, mahogany, maple, oak, poplar, lauan, teak, rosewood, okume, and meranti.

3. The coated plywood panel (100) of claim 1 or 2, wherein
- the primary coating (310) comprises a polymer obtained by polymerization of a resin selected from the group of phenol-amino, amino, and phenolic resins and
- the total surface-specific mass of the paper and the polymerized resin of the primary coating (310) is from 200 g/m² to 810 g/m².

4. The coated plywood panel (100) of any of the claims 1 to 3, wherein the primary coating (310) comprises
- a first primary layer (311) comprising first primary paper and first primary polymerized resin and
- a second primary layer (312) comprising second primary paper and second primary polymerized resin, wherein
- the second primary layer (312) is arranged relative to the first primary layer (311) in the direction of the thickness (T), and
- the second primary layer (312) is arranged in between the plywood part (200) and the first primary layer (311).

5. The coated plywood panel (100) of claim 4, wherein
- the first primary polymerized resin is a polymer obtained by polymerization of a resin selected from the group of phenol-amino, amino, and phenolic resins,
- the surface-specific mass of the first primary layer (311) is from 100 g/m² to 500 g/m²,
- the second primary polymerized resin is a polymer obtained by polymerization of a resin selected from the group phenol-amino, amino and phenolic resins, and
- the surface-specific mass of the second primary layer (312) is from 150 g/m² to 310 g/m².

6. The coated plywood panel (100) of any of the claims 1 to 5, comprising
- a second protrusion (720) such that at least some of the first protrusions (710) protrude from the second protrusion (720) such that
- each one of the first protrusions (710) that protrude from the second protrusion (720) has a cross sectional area that is from 0.2 mm² to 4 mm².

7. A method for coating a plywood panel (200) to produce the coated plywood panel (100) of any of the claims 1 to 6, the method comprising
- arranging available a plywood panel (200),
- arranging on a main surface (201) of the plywood panel (200) an amount of water (820), thereby forming a wet main surface (202) of the plywood panel (200),
- arranging on the wet main surface (202) of the plywood panel (200) components of a primary coating (310), the components of the primary coating (310) comprising paper and resin, thereby forming a preform (105) for a coated plywood panel (100) and
- hot pressing the preform (105) for the coated plywood panel (100) thereby coating the plywood panel (200) by
• arranging the preform (105) for the coated plywood panel (100) in between a first pressing surface (510) and a second pressing surface (520) such that the primary coating (310) faces the first pressing surface (510) and
• hot-pressing the preform (105) using at least a pressing part (517) of the first pressing surface (510) and a part of the second pressing surface (520), wherein
- the amount of water (820) is from 5 % to 60 % of the specific total amount of resin(s) of the primary coating (310) and
- the pressing part (517) comprises
• first indentations (610) having
∘ a depth (Dᵢ₁),
∘ a length (Lᵢ₁) perpendicular to the depth (Dᵢ₁) and
∘ a width (Wᵢ₁) perpendicular to the depth (Dᵢ₁) and the length (Lᵢ₁), and
- the smaller of the length (Lᵢ₁) and the width (Wᵢ₁) is from 0.3 mm to 1.5 mm,
- the larger of the length (Lᵢ₁) and the width (Wᵢ₁) is from 0.7 mm to 2.5 mm,
- the depth (Dᵢ₁) is from 0.05 mm to 0.5 mm.

8. The method of claim 7, wherein the hot pressing comprises
- pressing the primary coating (310) and the plywood panel (200) of the preform (105) for the coated plywood panel (100) against each other
• at a temperature (Te) of from 110 °C to 190 °C,
• using a pressure from 0.7 MPa to 3.5 MPa, and
• for from 3 minutes to 15 minutes.

9. The method of the claim 7 or 8, wherein
- the primary coating (310) comprises a resin selected from the group of phenol-amino, amino, and phenolic resins and
- the total surface-specific mass of the paper and the polymerized resin of the primary coating (310) is from 200 g/m² to 810 g/m².

10. The method any of the claims 7 to 9, wherein the primary coating (310) comprises
- a first primary layer (311) comprising first primary paper and first primary resin and
- a second primary layer (312) comprising second primary paper and second primary resin, wherein
- the second primary layer (312) is arranged relative to the first primary layer (311) in the direction of the thickness (T), and
- the second primary layer (312) is arranged in between the plywood part (200) and the first primary layer (311).

11. The method of claim 10, wherein
- the first primary resin is selected from the group of phenol-amino, amino, and phenolic resins,
- the surface-specific mass of the first primary layer (311) is from 100 g/m² to 500 g/m²,
- the second primary resin is selected from the group phenol-amino, amino and phenolic resins, and
- the surface-specific mass of the second primary layer (312) is from 150 g/m² to 310 g/m².

12. The method of any of the claims 7 to 11, wherein
- the pressing part (517) comprises a second indentation (620) such that at least some of the first indentations (610) penetrate into the pressing part (517) at the second indentation (620).

13. An arrangement for coating a plywood panel (200) to produce the coated plywood panel (100) of any of the claims 1 to 6, the arrangement comprising
- an applicator (810), configured to apply water (820) onto a main surface (201) of a plywood panel (200) to form a wet main surface (202) of the plywood panel (200),
- a coating unit (840) configured to arrange components (311, 312) of a primary coating (310) onto the wet main surface (202) of the plywood panel (200), and
- a hot-pressing apparatus (830) comprising
• a first pressing surface (510) and
• a second pressing surface (520), wherein
- the hot-pressing apparatus (830) is configured to press the components (311, 312) of the primary coating (310) and the plywood panel (200) against each other using at least a pressing part (517) of the first pressing surface (510) and a part of the second pressing surface (520) in such a way that the coating (310) faces the first pressing surface (510), wherein the pressing part (517) comprises
- first indentations (610) having
• a depth (Dᵢ₁),
• a length (Lᵢ₁) perpendicular to the depth (Dᵢ₁) and
• a width (Wᵢ₁) perpendicular to the depth (Dᵢ₁) and the length (Lᵢ₁),
wherein
- the smaller of the length (Lᵢ₁) and the width (Wᵢ₁) is from 0.3 mm to 1.5 mm,
- the larger of the length (Lᵢ₁) and the width (Wᵢ₁) is from 0.7 mm to 2.5 mm, and
- the depth (Dᵢ₁) is from 0.05 mm to 0.5 mm.

## Patentansprüche

1. Beschichtete Sperrholzplatte (100), wobei die beschichtete Sperrholzplatte (100) Folgendes umfasst:
- einen Sperrholzteil (200) und
- eine primäre Beschichtung (310), wobei die primäre Beschichtung (310) Papier und polymerisiertes Harz umfasst, wobei
- die primäre Beschichtung (310) an dem Sperrholzteil (200) befestigt ist und
- die primäre Beschichtung (310) Folgendes umfasst:
• eine erste Anzahl (N1) erster Vorsprünge (710, pi), die aus der primären Beschichtung (310) fortweisend von dem Sperrholzteil (200) derart überstehen, dass
• eine zweite Anzahl (N2) der ersten Vorsprünge (710, pi) auf ihrer Oberseite flach sind, wobei
- jeder (pi) der ersten Vorsprünge (710, pi)
• eine Höhe (H_{p1,pi}),
• eine Länge (L_{p1,pi}), die senkrecht zur Höhe ist, und
• eine Breite (W_{p1,pi}), die senkrecht zur Höhe und Länge (Lₚ₁) ist, derart aufweist, dass
- die kleinere von der Länge (L_{p1,pi}) und der Breite (W_{p1,pi}) 0,3 mm bis 1,5 mm beträgt,
- die größere von der Länge (L_{p1,pi}) und der Breite (W_{p1,pi}) 0,7 mm bis 2,5 mm beträgt und
- die Höhe (H_{p1,pi}) 0,05 mm bis 0,5 mm beträgt,
wobei
- das Verhältnis (N2/N1) der zweiten Anzahl (N2) zur ersten Anzahl (N1) mindestens 2/3 beträgt.

2. Beschichtete Sperrholzplatte (100) nach Anspruch 1, wobei
- der Sperrholzteil (200) eine Länge (L), eine Breite (W) und eine Dicke (T) aufweist, wobei die Dicke (T) kleiner als die kleinere von der Länge (L) und der Breite (W) ist, wobei der Sperrholzteil (200) Folgendes umfasst:
- eine erste Furnierlage (210), die Holz umfasst,
- eine zweite Furnierlage (220), die Holz umfasst, wobei die zweite Lage (220) relativ zu der ersten Lage (210) in der Richtung der Dicke (T) angeordnet ist, und
- einen Klebstoff (295) zwischen der ersten Furnierlage (210) und der zweiten Furnierlage (220), wobei
- keine hölzerne Furnierlage (210, 220, 230, 240, 250) des Sperrholzteils (200) auf einer ersten Seite der ersten Furnierlage (210) bleibt, wodurch die erste Furnierlage (210) eine erste Oberflächenfurnierlage (210) des Sperrholzteils (200) bildet,
- die primäre Beschichtung (310) eine an der ersten Seite der ersten Furnierlage (210) befestigte Lage bildet und eine solche Oberfläche der ersten Furnierlage (210), die eine Flächennormale aufweist, die parallel zu der Dicke (T) ist, abdeckt;
vorzugsweise
- die erste Furnierlage (210) ein Hartholz wie beispielsweise eines von Esche, Espe, Linde, Birke, Kirschbaum, Hickory, Mahagoni, Ahorn, Eiche, Pappel, Lauan, Teak, Rosenholz, Okume und Meranti umfasst.

3. Beschichtete Sperrholzplatte (100) nach Anspruch 1 oder 2, wobei
- die primäre Beschichtung (310) ein Polymer umfasst, das durch eine Polymerisation eines aus der Gruppe von Phenolamino-, Amino- und Phenolharzen ausgewählten Harzes gewonnen ist, und
- die gesamte flächenspezifische Masse des Papiers und des polymerisierten Harzes der primären Beschichtung (310) 200 g/m² bis 810 g/m² beträgt.

4. Beschichtete Sperrholzplatte (100) nach irgendeinem der Ansprüche 1 bis 3, wobei die primäre Beschichtung (310) Folgendes umfasst:
- eine erste primäre Lage (311), die ein erstes primäres Papier und ein erstes primäres polymerisiertes Harz umfasst, und
- eine zweite primäre Lage (312), die ein zweites primäres Papier und ein zweites primäres polymerisiertes Harz umfasst, wobei
- die zweite primäre Lage (312) relativ zu der ersten primären Lage (311) in der Richtung der Dicke (T) angeordnet ist und
- die zweite primäre Lage (312) zwischen dem Sperrholzteil (200) und der ersten primären Lage (311) angeordnet ist.

5. Beschichtete Sperrholzplatte (100) nach Anspruch 4, wobei
- das erste primäre polymerisierte Harz ein Polymer ist, das durch eine Polymerisation eines aus der Gruppe von Phenolamino-, Amino- und Phenolharzen ausgewählten Harzes gewonnen ist,
- die flächenspezifische Masse der ersten primären Lage (311) 100 g/m² bis 500 g/m² beträgt,
- das zweite primäre polymerisierte Harz ein Polymer ist, das durch eine Polymerisation eines aus der Gruppe von Phenolamino-, Amino- und Phenolharzen ausgewählten Harzes gewonnen ist, und
- die flächenspezifische Masse der zweiten primären Lage (312) 150 g/m² bis 310 g/m² beträgt.

6. Beschichtete Sperrholzplatte (100) nach irgendeinem der Ansprüche 1 bis 5, umfassend
- einen zweiten Vorsprung (720) derart, dass zumindest einige der ersten Vorsprünge (710) aus dem zweiten Vorsprung (720) derart überstehen, dass
- jeder der ersten Vorsprünge (710), die aus dem zweiten Vorsprung (720) überstehen, eine Querschnittsfläche aufweist, die 0,2 mm² bis 4 mm² beträgt.

7. Verfahren zur Beschichtung einer Sperrholzplatte (200) zur Herstellung der beschichteten Sperrholzplatte (100) nach irgendeinem der Ansprüche 1 bis 6, wobei das Verfahren Folgendes umfasst:
- verfügbares Anordnen einer Sperrholzplatte (200),
- Anordnen einer Menge Wasser (820) auf einer Hauptfläche (201) der Sperrholzplatte (200), wodurch eine nasse Hauptfläche (202) der Sperrholzplatte (200) gebildet wird,
- Anordnen von Komponenten einer primären Beschichtung (310) auf der nassen Hauptfläche (202) der Sperrholzplatte (200), wobei die Komponenten der primären Beschichtung (310) Papier und Harz umfassen, wodurch eine Vorform (105) für eine beschichtete Sperrholzplatte (100) gebildet wird, und
- Heißpressen der Vorform (105) für die beschichtete Sperrholzplatte (100), wodurch die Sperrholzplatte (200) beschichtet wird durch
• Anordnen der Vorform (105) für die beschichtete Sperrholzplatte (100) zwischen einer ersten Pressfläche (510) und einer zweiten Pressfläche (520) derart, dass die primäre Beschichtung (310) der ersten Pressfläche (510) zugewandt ist, und
• Heißpressen der Vorform (105) unter Verwendung von zumindest einem Pressteil (517) der ersten Pressfläche (510) und einem Teil der zweiten Pressfläche (520), wobei
- die Menge Wasser (820) 5 % bis 60 % der spezifischen Gesamtmenge von Harz(en) der primären Beschichtung (310) ausmacht und
- der Pressteil (517) Folgendes umfasst:
• erste Einbuchtungen (610) mit
∘ einer Tiefe (Dᵢ₁),
∘ einer Länge (Lᵢ₁), die senkrecht zur Tiefe (Dᵢ₁) ist, und
∘ einer Breite (Wᵢ₁), die senkrecht zur Tiefe (Dᵢ₁) und Länge (Lᵢ₁) ist, und
- die kleinere von der Länge (Lᵢ₁) und der Breite (Wᵢ₁) 0,3 mm bis 1,5 mm beträgt,
- die größere von der Länge (Lᵢ₁) und der Breite (Wᵢ₁) 0,7 mm bis 2,5 mm beträgt und
- die Tiefe (Dᵢ₁) 0,05 mm bis 0,5 mm beträgt.

8. Verfahren nach Anspruch 7, wobei das Heißpressen Folgendes umfasst:
- Gegeneinanderpressen der primären Beschichtung (310) und der Sperrholzplatte (200) der Vorform (105) für die beschichtete Sperrholzplatte (100)
• bei einer Temperatur (Te) von 110 °C bis 190 °C,
• unter Verwendung einer Drucks von 0,7 MPa bis 3,5 MPa und
• für 3 Minuten bis 15 Minuten.

9. Verfahren nach Anspruch 7 oder 8, wobei
- die primäre Beschichtung (310) ein aus der Gruppe von Phenolamino-, Amino- und Phenolharzen ausgewähltes Harz umfasst und
- die gesamte flächenspezifische Masse des Papiers und des polymerisierten Harzes der primären Beschichtung (310) 200 g/m² bis 810 g/m² beträgt.

10. Verfahren nach irgendeinem der Ansprüche 7 bis 9, wobei die primäre Beschichtung (310) Folgendes umfasst:
- eine erste primäre Lage (311), die ein erstes primäres Papier und ein erstes primäres Harz umfasst, und
- eine zweite primäre Lage (312), die ein zweites primäres Papier und ein zweites primäres Harz umfasst, wobei
- die zweite primäre Lage (312) relativ zu der ersten primären Lage (311) in der Richtung der Dicke (T) angeordnet ist und
- die zweite primäre Lage (312) zwischen dem Sperrholzteil (200) und der ersten primären Lage (311) angeordnet ist.

11. Verfahren nach Anspruch 10, wobei
- das erste primäre Harz aus der Gruppe von Phenolamino-, Amino- und Phenolharzen ausgewählt ist,
- die flächenspezifische Masse der ersten primären Lage (311) 100 g/m² bis 500 g/m² beträgt,
- das zweite primäre Harz aus der Gruppe von Phenolamino-, Amino- und Phenolharzen ausgewählt ist und
- die flächenspezifische Masse der zweiten primären Lage (312) 150 g/m² bis 310 g/m² beträgt.

12. Verfahren nach irgendeinem der Ansprüche 7 bis 11, wobei
- der Pressteil (517) eine zweite Einbuchtung (620) derart umfasst, dass zumindest einige der ersten Einbuchtungen (610) an der zweiten Einbuchtung (620) in den Pressteil (517) eindringen.

13. Anordnung zur Beschichtung einer Sperrholzplatte (200) zur Herstellung der beschichteten Sperrholzplatte (100) nach irgendeinem der Ansprüche 1 bis 6, wobei die Anordnung Folgendes umfasst:
- einen Applikator (810), der dafür konfiguriert ist, Wasser (820) auf eine Hauptfläche (201) einer Sperrholzplatte (200) aufzubringen, um eine nasse Hauptfläche (202) der Sperrholzplatte (200) zu bilden,
- eine Beschichtungseinheit (840), die dafür konfiguriert ist, Komponenten (311, 312) einer primären Beschichtung (310) auf der nassen Hauptfläche (202) der Sperrholzplatte (200) anzuordnen, und
- eine Heißpressvorrichtung (830), die Folgendes umfasst:
• eine erste Pressfläche (510) und
• eine zweite Pressfläche (520), wobei
- die Heißpressvorrichtung (830) dafür konfiguriert ist, die Komponenten (311, 312) der primären Beschichtung (310) und die Sperrholzplatte (200) gegeneinander zu pressen, wobei zumindest ein Pressteil (517) der ersten Pressfläche (510) und ein Teil der zweiten Pressfläche (520) derart verwendet werden, dass die Beschichtung (310) der ersten Pressfläche (510) zugewandt ist, wobei der Pressteil (517) Folgendes umfasst:
- erste Einbuchtungen (610) mit
• einer Tiefe (Dᵢ₁),
• einer Länge (Lᵢ₁), die senkrecht zur Tiefe (Dᵢ₁) ist, und
• einer Breite (Wᵢ₁), die senkrecht zur Tiefe (Dᵢ₁) und Länge (Lᵢ₁) ist, wobei
- die kleinere von der Länge (Lᵢ₁) und der Breite (Wᵢ₁) 0,3 mm bis 1,5 mm beträgt,
- die größere von der Länge (Lᵢ₁) und der Breite (Wᵢ₁) 0,7 mm bis 2,5 mm beträgt und
- die Tiefe (Dᵢ₁) 0,05 mm bis 0,5 mm beträgt.

## Revendications

1. Panneau de contreplaqué revêtu (100), le panneau de contreplaqué revêtu (100) comprenant
- une partie contreplaqué (200) et
- un revêtement primaire (310), le revêtement primaire (310) comprenant du papier et de la résine polymérisée, dans lequel
- le revêtement primaire (310) est fixé sur la partie contreplaqué (200), et
- le revêtement primaire (310) comprend
• un premier nombre (N1) de premières saillies (710, pi) dépassant du revêtement primaire (310) à l'opposé de la partie contreplaqué (200) de telle sorte que
• un deuxième nombre (N2) des premières saillies (710, pi) sont nivelées sur leur sommet, dans lequel
- chacune (pi) des premières saillies (710, pi) a
• une hauteur (H_{p1,pi}),
• une longueur (L_{p1,pi}) qui est perpendiculaire à la hauteur et
• une largeur (W_{p1,pi}) qui est perpendiculaire à la hauteur et à la longueur (Lₚ₁) de sorte que
- la plus petite de la longueur (L_{p1,pi}) et de la largeur (W_{p1,pi}) est de 0,3 mm à 1,5 mm,
- la plus grande de la longueur (L_{p1,pi}) et de la largeur (W_{p1,pi}) est de 0,7 mm à 2,5 mm, et
- la hauteur (H_{p1,pi}) est de 0,05 mm à 0,5 mm,
dans lequel
- le rapport (N2/N1) du deuxième nombre (N2) au premier nombre (N1) est d'au moins 2/3.

2. Panneau de contreplaqué revêtu (100) selon la revendication 1, dans lequel
- la partie contreplaqué (200) a une longueur (L), une largeur (W) et une épaisseur (T), dans laquelle l'épaisseur (T) est inférieure à la plus petite de la longueur (L) et de la largeur (W), la partie contreplaqué (200) comprenant
- une première couche de placage (210) comprenant du bois,
- une deuxième couche de placage (220) comprenant du bois, la deuxième couche (220) étant disposée par rapport à la première couche (210) dans le sens de l'épaisseur (T), et
- de l'adhésif (295) entre la première couche de placage (210) et la deuxième couche de placage (220), dans lequel
- aucune couche de placage en bois (210, 220, 230, 240, 250) de la partie contreplaqué (200) n'est laissée sur un premier côté de la première couche de placage (210), grâce à quoi la première couche de placage (210) forme une première couche de placage de surface (210) de la partie contreplaqué (200),
- le revêtement primaire (310) forme une couche fixée au premier côté de la première couche de placage (210) et recouvrant une surface de la première couche de placage (210) qui a une surface normale qui est parallèle à l'épaisseur (T) ;
de préférence,
- la première couche de placage (210) comprend du bois dur, tel que du frêne, du tremble, du tilleul, du bouleau, du cerisier, du noyer blanc, de l'acajou, de l'érable, du chêne, du peuplier, du lauan, du teck, du bois de rose, de l'okoumé et du meranti.

3. Panneau de contreplaqué revêtu (100) selon la revendication 1 ou 2, dans lequel
- le revêtement primaire (310) comprend un polymère obtenu par polymérisation d'une résine choisie dans le groupe des résines phénol-amino, amino et phénoliques et
- la masse spécifique surfacique totale du papier et de la résine polymérisée du revêtement primaire (310) est de 200 g/m² à 810 g/m².

4. Panneau de contreplaqué revêtu (100) selon l'une quelconque des revendications 1 à 3, dans lequel le revêtement primaire (310) comprend
- une première couche primaire (311) comprenant un premier papier primaire et une première résine polymérisée primaire et
- une deuxième couche primaire (312) comprenant un deuxième papier primaire et une deuxième résine polymérisée primaire, dans laquelle
- la deuxième couche primaire (312) est disposée par rapport à la première couche primaire (311) dans le sens de l'épaisseur (T), et
- la deuxième couche primaire (312) est disposée entre la partie contreplaqué (200) et la première couche primaire (311).

5. Panneau de contreplaqué revêtu (100) selon la revendication 4, dans lequel
- la première résine polymérisée primaire est un polymère obtenu par polymérisation d'une résine choisie dans le groupe des résines phénol-amino, amino et phénoliques,
- la masse spécifique surfacique de la première couche primaire (311) est de 100 g/m² à 500 g/m²,
- la deuxième résine polymérisée primaire est un polymère obtenu par polymérisation d'une résine choisie dans le groupe des résines phénol-amino, amino et phénoliques, et
- la masse spécifique surfacique de la deuxième couche primaire (312) est de 150 g/m² à 310 g/m².

6. Panneau de contreplaqué revêtu (100) selon l'une quelconque des revendications 1 à 5, comprenant
- une seconde saillie (720) telle qu'au moins certaines des premières saillies (710) dépassent de la seconde saillie (720) de telle sorte que
- chacune des premières saillies (710) qui dépassent de la seconde saillie (720) a une aire de section transversale qui est de 0,2 mm² à 4 mm².

7. Procédé de revêtement d'un panneau de contreplaqué (200) pour produire le panneau de contreplaqué revêtu (100) selon l'une quelconque des revendications 1 à 6, le procédé comprenant
- disposer, accessible, un panneau de contreplaqué (200),
- disposer sur une surface principale (201) du panneau de contreplaqué (200) une quantité d'eau (820), formant ainsi une surface principale humide (202) du panneau de contreplaqué (200),
- disposer sur la surface principale humide (202) du panneau de contreplaqué (200) les composants d'un revêtement primaire (310), les composants du revêtement primaire (310) comprenant du papier et de la résine, formant ainsi une préforme (105) pour un panneau de contreplaqué revêtu (100) et
- presser à chaud la préforme (105) pour le panneau de contreplaqué revêtu (100) revêtant ainsi le panneau de contreplaqué (200) par
• agencement de la préforme (105) pour le panneau de contreplaqué revêtu (100) entre une première surface de pressage (510) et une seconde surface de pressage (520) de telle sorte que le revêtement primaire (310) soit face à la première surface de pressage (510) et
• pressage à chaud de la préforme (105) en utilisant au moins une partie de pressage (517) de la première surface de pressage (510) et une partie de la seconde surface de pressage (520), dans lequel
- la quantité d'eau (820) représente de 5 % à 60 % de la quantité totale spécifique de résine(s) du revêtement primaire (310) et
- la partie de pressage (517) comprend
• des premières indentations (610) ayant
∘ une profondeur (Dᵢ₁),
∘ une longueur (Lᵢ₁) perpendiculaire à la profondeur (Dᵢ₁) et
∘ une largeur (Wᵢ₁) perpendiculaire à la profondeur (Dᵢ₁) et à la longueur (Lᵢ₁), et
- la plus petite de la longueur (Lᵢ₁) et de la largeur (Wᵢ₁) est de 0,3 mm à 1,5 mm,
- la plus grande de la longueur (Lᵢ₁) et de la largeur (Wᵢ₁) est de 0,7 mm à 2,5 mm,
- la profondeur (Dᵢ₁) est de 0,05 mm à 0,5 mm.

8. Procédé selon la revendication 7, dans lequel le pressage à chaud comprend
- le pressage du revêtement primaire (310) et du panneau de contreplaqué (200) de la préforme (105) pour le panneau de contreplaqué revêtu (100) l'un contre l'autre
• à une température (Te) de 110 °C à 190 °C,
• en utilisant une pression de 0,7 MPa à 3,5 MPa, et
• pendant 3 minutes à 15 minutes.

9. Procédé selon la revendication 7 ou 8, dans lequel
- le revêtement primaire (310) comprend une résine choisie dans le groupe des résines phénol-amino, amino et phénoliques et
- la masse spécifique surfacique totale du papier et de la résine polymérisée du revêtement primaire (310) est de 200 g/m² à 810 g/m².

10. Procédé selon l'une quelconque des revendications 7 à 9, dans lequel le revêtement primaire (310) comprend
- une première couche primaire (311) comprenant un premier papier primaire et une première résine primaire et
- une deuxième couche primaire (312) comprenant un deuxième papier primaire et une deuxième résine primaire, dans laquelle
- la deuxième couche primaire (312) est disposée par rapport à la première couche primaire (311) dans le sens de l'épaisseur (T), et
- la deuxième couche primaire (312) est disposée entre la partie contreplaqué (200) et la première couche primaire (311).

11. Procédé selon la revendication 10, dans lequel
- la première résine primaire est choisie dans le groupe des résines phénol-amino, amino et phénoliques,
- la masse spécifique surfacique de la première couche primaire (311) est de 100 g/m² à 500 g/m²,
- la deuxième résine primaire est choisie dans le groupe des résines phénol-amino, amino et phénoliques, et
- la masse spécifique surfacique de la deuxième couche primaire (312) est de 150 g/m² à 310 g/m².

12. Procédé selon l'une quelconque des revendications 7 à 11, dans lequel
- la partie de pressage (517) comprend une deuxième indentation (620) de telle sorte qu'au moins certaines des premières indentations (610) pénètrent dans la partie de pressage (517) au niveau de la deuxième indentation (620).

13. Agencement pour revêtir un panneau de contreplaqué (200) afin de produire le panneau de contreplaqué revêtu (100) selon l'une quelconque des revendications 1 à 6, l'agencement comprenant
- un applicateur (810), conçu pour appliquer de l'eau (820) sur une surface principale (201) d'un panneau de contreplaqué (200) pour former une surface principale humide (202) du panneau de contreplaqué (200),
- une unité de revêtement (840) conçue pour disposer les composants (311, 312) d'un revêtement primaire (310) sur la surface principale humide (202) du panneau de contreplaqué (200), et
- un appareil de pressage à chaud (830) comprenant
• une première surface de pressage (510) et
• une seconde surface de pressage (520), dans lequel
- l'appareil de pressage à chaud (830) est conçu pour presser les composants (311, 312) du revêtement primaire (310) et le panneau de contreplaqué (200) l'un contre l'autre en utilisant au moins une partie de pressage (517) de la première surface de pressage (510) et une partie de la seconde surface de pressage (520) de telle manière que le revêtement (310) soit face à la première surface de pressage (510), dans lequel la partie de pressage (517) comprend
- des premières indentations (610) ayant
• une profondeur (Dᵢ₁),
• une longueur (Lᵢ₁) perpendiculaire à la profondeur (Dᵢ₁) et
• une largeur (Wᵢ₁) perpendiculaire à la profondeur (Dᵢ₁) et à la longueur (Lᵢ₁), dans lesquelles
- la plus petite de la longueur (Lᵢ₁) et de la largeur (Wᵢ₁) est de 0,3 mm à 1,5 mm,
- la plus grande de la longueur (Lᵢ₁) et de la largeur (Wᵢ₁) est de 0,7 mm à 2,5 mm, et
- la profondeur (Dᵢ₁) est de 0,05 mm à 0,5 mm.
